# EUROPEAN PATENT SPECIFICATION

(11) **EP 4 127 345 B1**
(45) Date of publication and mention of the grant of the patent: **19.08.2026**
(21) Application number: 21713670.4
(22) Date of filing: 24.03.2021
(51) Int. Cl.: E04B 5/32, E04C 5/01, E04C 5/07, E04B 5/43, E02D 27/01, E04C 2/04, E04C 2/06, E04C 3/26, E01C 11/18, E01C 11/20

(54) **POST-TENSIONED CONCRETE SLAB WITH FIBRES**
NACHGESPANNTE BETONPLATTE MIT FASERN
DALLE DE BÉTON POST-TENDUE COMPORTANT DES FIBRES

(30) Priority: 24.03.2020 EP 20075006
(43) Date of publication of application: 08.02.2023
(73) Proprietor: NV Bekaert SA, 8550 Zwevegem (BE); CCL Stressing International Ltd, Leeds LS11 5BP (GB)
(72) Inventor: THOOFT, Hendrik, 9700 Welden (BE); HAYEK, Carol, Leeds LS11 SBP (GB)
(74) Representative: Serwas, Harry
(86) International application number: PCT/EP2021/057580
(87) International publication number: WO 2021/191283

(56) References cited:
- EP-A1- 0 964 113
- EP-A1- 3 026 031
- WO-A1-2007/019593
- WO-A1-2018/084741
- WO-A1-98/36138
- WO-A2-2012/080326
- US-A1- 2016 312 464

## Description

### Technical Field

The invention relates to a concrete slab comprising conventional concrete and a combined reinforcement of both post-tension steel strands and fibres.

### Background Art

Post-tensioned concrete is a variant of pre-stressed concrete where the tendons, i.e. the post tension steel strands, are tensioned after the surrounding concrete structure has been cast and hardened. It is a practice known in the field of civil engineering since the middle of the twentieth century.

Steel fibre reinforced concrete is concrete where the reinforcement is provided by short pieces of steel wire that are spread in the concrete. US-A-1,633,219 disclosed the reinforcement of concrete pipes by means of pieces of steel wire. Other prior art publications US-A-3,429,094, US-A-3,500,728 and US-A-3,808,085 reflect initial work done by the Batelle Development Corporation. The steel fibres were further improved and industrialized by NV Bekaert SA, amongst others by providing anchorage ends at both ends of the pieces of steel wire, see US-A-3,900,667. Another relevant improvement was disclosed in US-A-4,284,667 and related to the introduction of glued steel fibres in order to mitigate problems of mixability in concrete. Flattening the bent anchorage ends of steel fibres, as disclosed in EP-B1-0 851 957, increased the anchorage of the steel fibres in concrete. The supply of steel fibres in a chain package was disclosed in EP-B1-1 383 634.

Both reinforcement techniques, post-tensioned concrete and fibre reinforced concrete such as steel fibre reinforced concrete not only exist as such but also in combination. The purpose was to combine the advantages of both reinforcement types to obtain an efficient and reliable reinforced concrete slab.

Prior art concrete slabs with combined reinforcement of both post-tension strands and fibres suffer from an overdesign or from a complex design. In an attempt to stay on the very safe side and to meet the specifications, the dosage of steel fibres is often that high that problems such as ball forming occur during mixing of the steel fibres in the non-cured concrete, despite the existence of prior art solutions. Alternatively, or in addition to this, the distance between two neighbouring post-tension strands or between two neighbouring bundles of post-tension strands is very small, causing a lot of labour when installing the post-tension strands, attaching anchors and applying tension. In yet other prior art embodiments the composition of the concrete is such that shrinkage during curing is limited, i.e. a low shrinkage concrete or a shrinkage compensating concrete composition is selected.

An example of a complex design of a concrete slab with reinforcement by both post-tension steel strands and steel fibres is disclosed in NZ-A-220 693. This prior art concrete slab has an under and upper skin layer with steel fibres with a core layer in-between with post-tension tendons. US 2016/312464 A1 discloses a concrete slab according to the preamble of independent claim 1.

### Disclosure of Invention

It is a general aspect of the invention to avoid the disadvantages of the prior art.

It is a further general aspect of the invention to avoid overdesign.

It is another aspect of the invention to provide a combination reinforcement of both post-tension strands and fibres to reinforce concrete efficiently and effectively.

It is still another aspect of the invention to provide a combination reinforcement of both post-tension strands and fibres for conventional concrete. The post-tension steel strands are thereby post-tensioned which means that tension is applied to them only after the concrete has been cast. The post-tension steel strands may thus be installed on-site and/or may be installed before or after casting. The post-tension steel strands may comprise anchor systems, that may especially attach the post-tension steel strands to the cast concrete of the slab according to the invention, and/or ducts or sheathing. This may especially contributes for example to allow to achieve bigger slabs, to help with continuity, to help with safety, to help with camber, to minimize pre-stress losses, especially due to creep, to increase the freedom regarding possible shapes and to facilitate a draped configuration of the tendons or post-tension steel strands. In contrast, pre-tensioning is used mostly for pre-cast elements casted off-site with tendons fixed to a form and being tensioned before any concrete is cast. The resulting pre-cast elements obtained by pre-tensioning are thus consequently of quite limited size due to the very need to use forms or moulds, so that flooring may usually require multiple pre-cast elements.

According to the invention, there is provided a concrete slab according to independent claim 1 comprising conventional concrete and a combined reinforcement of both post-tension steel strands and fibres, e.g. macro-synthetic fibres or steel fibres. The post-tension steel strands having a diameter ranging from 5 mm to 20 mm, e.g. from 6 mm to 20 mm, e.g. from 6,5 mm to 18,0 mm, e.g. from 13 mm to < 18,0 mm. The post-tension steel strands have a tensile strength higher than 1700 MPa, e.g. higher than 1800 MPa, e.g. higher than 1900 MPa, e.g. higher than 2000 MPa, preferably between 1800 MPa and 4000 MPa. The post-tension steel strands may also for example have a maximum breaking load of higher than 190 kN, e.g. higher than 195 kN, e.g. higher than 200 kN, e.g. higher than 220 kN, preferably between 195 kN and 350 kN.

The post-tension steel strands may be bonded or unbonded

Particularly with a view to be used as post-tension steel strand, the steel strand preferably has a low relaxation behaviour, i.e. a high yield point at 0,1% elongation. The yield point at 0,1% can be considered as the maximum elastic limit. Below the yield point, the post-tension strand will remain in elastic mode. Above the yield point, the post-tension strand may start to elongate in plastic mode, i.e. an elongation that is not reversible. Preferably, the ratio of the yield strength R_{p0,1} to the tensile strength Rₘ is higher than 0,75.

Low relation post-tension steel strands may have relaxation losses of not more than 2.5 % when initially loaded to 70 % of specified minimum breaking strength or not more than 3.5 % when loaded to 80 % of specified minimum breaking strength of the post-tension steel strand after 1000 hours.

The fibres can be steel fibres and are present in a dosage ranging from 10 kg/m³ to 35 kg/m³, e.g. ranging from 15 kg/m³ to 35 kg/m³, e.g. from 20 kg/m³ to 30 kg/m³, preferably from 10 kg/m³ to < 30 kg/m³ or further preferred from 10 kg/m³ to 27 kg/m³. The amount of steel fibers is below time the amount recommended as rebar or steel bar replacement. The fibres can also be macro-synthetic fibres and may, in such case, be present in a dosage ranging from 1,5 kg/m³ to 9 kg/m³, e.g. from 2,5 kg/m³ to 7 kg/m³, e.g. from 3,5 kg/m³ to 5,0 kg/m³.

The fibres are present in all parts of the concrete slab, i.e. the concrete slab is preferably a monolithic slab and the fibres are substantially homogeneously distributed over the concrete slab, except for a very thin upper skin layer that may be applied to provide a flat and wear resistant surface to the slab and to avoid fibres from protruding. A concrete slab in the sense of the present invention may thereby have a uniform average density. This may mean that a slab according to the invention does therefore especially not comprise regions or parts of lower density, especially no aggregated and/or aerated parts, further more preferred no aggregated and/or aerated blocks, which have a lower density, especially compared to cast concrete. A concrete slab in the sense of the present invention may thereby further for example also preferably be cast in one day and/or in one go and/or be fully casted, whereby especially for example no use of or assembly of blocks is involved. A concrete slab in the sense of the present invention may further for example contain only the fibres and the post-tension steel strands as reinforcement elements, which especially for example may mean that the slab may be free of any other reinforcement elements, especially other metal or steel reinforcement elements besides the fibres and the post-tension steel strands, especially free of rebars or steel bars, steel mesh, steel rods or the like. A concrete slab in the sense of the present invention may comprise a slip-sheet, especialy for example a perforated slip-sheet. A concrete slab according to the present invention is free of a vapor barrier, especially at the basis of the concrete slab, so that said slab does not comprise a vapor barrier.

The above-mentioned dosages of fibres (10 kg/m³ to 35 kg/m³ in case of steel fibres and 1,5 kg/m³ to 9 kg/m³ in case of macro-synthetic fibres) are low to moderate in comparison with prior art dosages of more than 40 kg/m³ or more than 9 kg/m³. These low to moderate dosages allow integrating the fibres in a more homogeneous way in the concrete and facilitate the mixing of the fibres in the concrete.

The conventional concrete preferably has a characteristic compressive cube strength or comparable cylinder strength of 30 MPa or N/mm² or higher. More preferably, the conventional concrete has a strength equal to or higher than the strength of concrete of the C20/25 strength classes as defined in EN206 or equivalent national code requirements and smaller than or equal to the strength of concrete of the C50/60 strength classes as defined in EN206. These types of concrete are widely available and avoid adding ingredients that reduce the shrinkage during hardening. For the avoidance of doubt, self-compacting concrete is considered as conventional concrete. Conventional concrete in the sense of the present invention may thereby especially also for example have normal shrinkage and/or may not encompass low shrinkage concrete.

In a preferable embodiment of the invention, the fibres are steel fibres and have a straight middle portion and anchorage ends at both ends.

Most preferably the tensile strength of the middle portion is higher than 1400 MPa, e.g. higher than 1500 MPa, e.g. higher than 1600 MPa, preferably higher than 1700 MPa, further preferred higher than 2000 MPa, even further preferred higher than 2200 MPa, preferably between 1400 MPa and 3500 MPa.

The anchorage ends preferably each comprise three or four bent sections. Examples of such steel fibres are disclosed in EP-B1-2 652 221 and in EP-B1-2 652 222. These may be particularly useful in view of their good dosage/performance ratio, especially in combination with post tensioning as in the present invention, so that they may contribute to achieve good performance, especially regarding for example crack control, at relatively moderate dosages.

In a particular aspect of the invention, the maximum crack width of the concrete slab after hardening is 0,5 mm, e.g. 0,3 mm, e.g. 0,2 mm. In case the concrete slab has a length L greater than 100 m, the concrete slab has joints and a distance between two neighbouring joints is higher than 60 m, e.g. higher than 80 m, e.g. higher than 90 m.

In a first particular practical embodiment of the invention, the concrete slab according to the invention is a concrete slab on ground, (e.g. a concrete slab on a subbase prepared on a subgrade) with between the concrete slab and the ground a plastic slip sheet or a multitude of plastic slip sheets or not such a plastic slip sheet.

Due to the high tensile strength and the high yield strength, the distance between two neighbouring post-tension steel strands or between two neighbouring bundles of post-tension steel strands

may be higher than 0,80 m, e.g. higher than 0,90 m, e.g. higher than 1,0 m.

According to a particular and preferable aspect of the invention, the post-tension steel strands exercise in one direction a compression force on the concrete slab that is between 0 % and 200 % greater, e.g. between 0 % and 100 %, e.g. between 0,5 % and 50 % greater than a force according to following formula: ${μ}_{o} \times {γ}_{c} \times b \times h \times L / 2$ where
- L is the length of the concrete slab;
- b is the width of the concrete slab;
- h is the thickness of the concrete slab;
- *µ*ₒ is the coefficient of friction between the concrete slab and a subbase;
- *γ*_{c} is the specific weight of concrete.
This means that the compression force ranges between one time and three times the value of formula (1).

A typical value of mₒ is 0,5. Generally, mₒ can range between 0,3 and 3,5, for example between 0,3 and 1,0 (see ACI 360/06).
A typical value of g_{c} is 23.560,0 N/m³, g_{c} can range between 18.000 N/m³ and 26.000 N/m³. Other typical values are 24.500 N/m³ and 25.000 N/m³. The thickness h of a slab according to the invention may thereby preferably be between 4 cm and 75 cm, preferably 5 cm and 65 cm, further preferred 10 cm and 55 cm.

In case the amount of reinforcement by means of post-tension steel strands is determined to be within the above-mentioned range (i.e. one to three times the value of the above-mentioned formula (1)), the tensile stresses caused by the shrinkage of concrete slabs are compensated and overdesign of post-tension steel strands is avoided.

In addition, if the amount of reinforcement by means of post-tension steel strand is within the above-mentioned range, the maximum crack with of the concrete slab after hardening can be kept lower than 0,5 mm, e.g. between the range of 0,2 mm to 0,5 mm.

In a second particular practical embodiment of the invention, the concrete slab according to the invention is a concrete slab on concrete piles or on gravel columns.

In a concrete slab on concrete piles or on gravel columns the post-tension steel strands may be present according to a straight line or be present in so-called draped form, i.e. they are positioned to take away as much as possible the tensile stresses in the concrete: above the concrete piles or gravel columns they are positioned in the upper half of the concrete slab and in-between the piles they are positioned in the lower half of the concrete slab.

The concrete piles or gravel columns are usually arranged in a regular rectangular pattern or quadrilaterial shape where a set of four concrete piles or gravel columns or a set of four groups of concrete piles or gravel columns forms a rectangle. The concrete slab comprises straight zones that connect in the two directions, i.e. in length direction and in width direction, the shortest distance between those areas of the concrete slab above the concrete piles or gravel columns.
The straight zones have a width that may vary between 50 % and 500 %, e.g. between 50 % and 200 % of the greatest cross-sectional dimension of the concrete piles of gravel columns. Post-tension steel strands are present in bundles in those straight zones. The distance between neighbouring post-tension steel strands within bundle in the straight zones may be smaller than 0.80 m. The presence of bundles of post-tension steel strands in the straight zones is often referred to as banded pattern.

Post-tension steel strands may or may not be present outside the straight zones. If present, the shortest distance between post-tension steel strands outside the straight zones and the post-tension steel strands in the straight zones is larger than 0.80 m.

### Brief Description of Figures in the Drawings

Figures 1a, 1b, 1c, 1d, 1e, 1f, 1g, 1h, 1i all schematically represent various loading configurations of a concrete slab;
Figure 2 is a schematic presentation of a concrete slab according to the invention;
Figure 3 is a cross-section of a post-tension steel strand to be used in the present invention;
Figure 4 shows a steel fibre that can be used in the present invention.

### Mode(s) for Carrying Out the Invention

### Explanation of the Principle behind the Invention

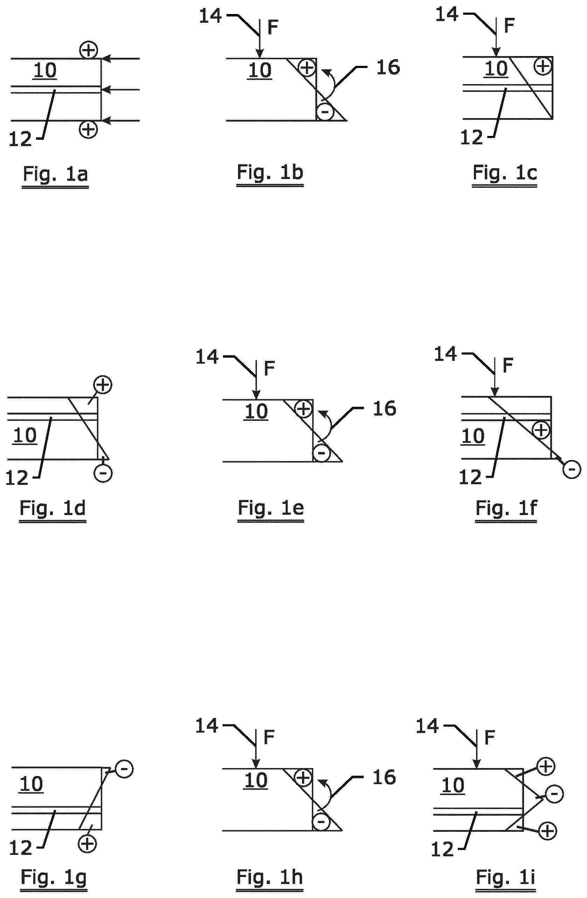

Concrete is a very brittle material that is hardly resistant to tensile tensions, the purpose is to avoid or at least to reduce the presence of tensile stresses. In Figures 1a, 1b, 1c, 1d, 1e, 1f, 1g, 1h, 1i the ⊕ symbol, a plus sign in a circle, points to compressive stresses, while the e symbol, a minus sign in a circle, points to tensile stresses.

Figure 1a shows a concrete slab 10 reinforced by means of a post-tension steel strand 12 that is located in the middle of the slab 10. No external loads are present here. The post-tension steel strand 12 creates compressive stresses over the whole thickness of the slab 10.

Figure 1b relates to a situation where the slab 10 has no post-tension steel strand but where a load F represented by arrow 14 is exercised on the slab 10. The load F creates a bending moment M, represented by arrow 16. As a result of bending moment M, compressive stresses are present at the top of the slab 10 and tensile stresses at the bottom of the slab 10.

Figure 1c shows the situation where a load F is exercised on a slab 10 that is reinforced by means of a post-tension steel strand 12. As schematically shown in Figure 1c, the tensile stresses at the bottom of slab 10 are compensated by the action of the post-tension steel strand 12. However, in case the load F is a little bit higher, tensile stresses will be present at the bottom of slab 10 and cracks may originate.

Figure 1d shows a concrete slab 10 reinforced by means of a post-tension steel strand 12 that is located in the upper part of the slab 10. No external loads are present here. The post-tension steel strand 12 creates compressive stresses in the upper part of slab 10 and tensile stresses in the lower part of slab 10.

Figure 1e relates to a situation where the slab 10 has no post-tension steel strand but where a load F, represented by arrow 14, is exercised on the slab 10. The load F creates a bending moment M, represented by arrow 16. As a result of bending moment M, compressive stresses are present at the top of the slab 10 and tensile stresses at the bottom of the slab 10.

Figure 1f shows the situation where a load F is exercised on a slab 10 that is reinforced by means of the post-tension steel strand 12 of Figure 1d. As schematically shown in Figure 1f, the tensile stresses at the bottom of slab 10 are not compensated by the action of the post-tension steel strand 12, on the contrary.

Figure 1g shows a concrete slab 10 reinforced by means of a post-tension steel strand 12 that is located in the lower part of the slab 10. No external loads are present here. The post-tension steel strand 12 creates compressive stresses in the lower part of slab 10 and tensile stresses in the upper part of slab 10.

Figure 1h relates to a situation where the slab 10 has no post-tension steel strand but where a load F, represented by arrow 14, is exercised on the slab 10. The load F creates a bending moment M, represented by arrow 16. As a result of bending moment M, compressive stresses are present at the top of the slab 10 and tensile stresses at the bottom of the slab 10.

Figure 1i shows the situation where a load F is exercised on a slab 10 that is reinforced by means of the post-tension steel strand 12 of Figure 1g. As a result of bending moment M, the tensile stresses present at the top of the slab 10 are compensated and the compressive stresses present at the bottom of slab 10 are compensated as well.

Although it is best for a concrete slab on ground to position the post-tension steel strand in the middle of the slab, no position can guarantee absence of tensile stresses. Within the context of the present invention, post-tension steel strands are therefore designed to take up and compensate the tensile stresses that may originate during hardening and shrinkage of a concrete in addition to applied loads. The post-tension steel strands are of a sufficiently high tensile strength, i.e. above 1700 MPa or even above 1800 MPa, so that conventional concrete can be used and ingredients to compensate shrinkage can be avoided.

The fibres are mixed in the concrete as homogeneously as possible so that they are present over the whole volume and able to take tensile stresses caused by various loads.

In a first embodiment of the invention, the concrete is poured on a slip sheet that is put on a substantially flat or flattened underground. Alternatively, the slip sheet can be avoided and the concrete is poured directly on the subbase.

In a second embodiment of the invention, a concrete slab is formed on piles or columns. A slip sheet may be or may not be present between the ground or subbase, the piles and the slab.

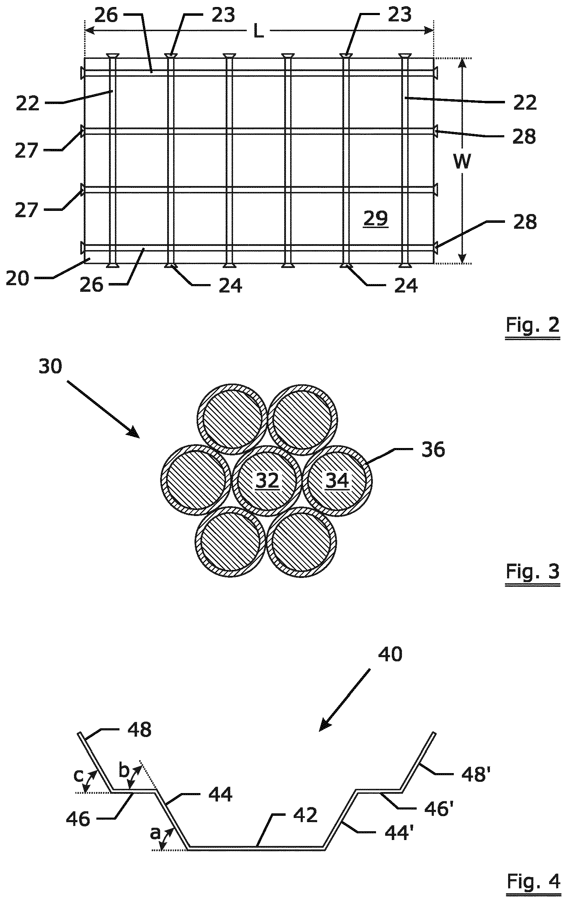

Figure 2 schematically illustrates a concrete slab 20 on ground according to the invention. The slab 20 has a width W and a length L. A first series of post-tension steel strands 22 bridge the width W and are anchored at one side with fixed end anchors 23 and at the other side with stressing end anchors 24. A second series of post-tension steel strands 26 bridge the length L and are anchored at one side with fixed end anchors 27 and at the other side with stressing end anchors 28. Alternatively, stressing may also occur on both sides, i.e. stressing end anchors are present at both sides.

As the length L is greater than the width W, the post-tension steel strands 26 are positioned closer to each other than the post-tension steel strands 22, but the distance between neighbouring post-tension steel strands 26 can be kept greater than 0,80 m independent of the length L.

Steel fibres 29 are spread over the whole volume of the slab 20.

### Post-Tension Steel Strand

Figure 3 shows a cross-section of a typical post-tension steel strand 30. Post-tension steel strand 30 has a 1+6 construction with a core steel wire 32 and six layer steel wires 34 twisted around the core steel wire 32. In the embodiment of Figure 3, the post-tension steel strand 30 is in a non-compacted form.

In an alternative preferable embodiment, the post-tension steel strand may be in a compacted form. In this compacted form, the six layer steel wires no longer have a circular cross-section but a cross-section in the form of a trapezium with rounded edges. A compacted post-tension steel strand has less voids and more steel per cross-sectional area.

As mentioned, the post-tension steel strand has a high yield point, i.e. the yield force at 0,1 % elongation is high. The ratio yield force F_{p0,1} to breaking force Fₘ is higher than 75%, preferably higher than 80%, e.g. higher than 85%.

A typical steel composition of a post-tension steel strand is a minimum carbon content of 0,65%, a manganese content ranging from 0,20% to 0,80%, a silicon content ranging from 0,10% to 0,40%, a maximum sulfur content of 0,03%, a maximum phosphorus content of 0,30%, the remainder being iron, all percentages being percentages by weight. Most preferably, the carbon content is higher than 0,75%, e.g. higher than 0,80%. Other elements as copper or chromium may be present in amounts not greater than 0,40%.

All steel wires 32, 34 may be provided with a metallic coating 36, such as zinc or a zinc aluminium alloy.
A zinc aluminum coating has a better overall corrosion resistance than zinc. In contrast with zinc, the zinc aluminum coating is temperature resistant. Still in contrast with zinc, there is no flaking with the zinc aluminum alloy when exposed to high temperatures.

A zinc aluminum coating may have an aluminum content ranging from 2 per cent by weight to 12 per cent by weight, e.g. ranging from 3 % to 11%.

A preferable composition lies around the eutectoid position: Al about 5 per cent. The zinc alloy coating may further have a wetting agent such as lanthanum or cerium in an amount less than 0,1 per cent of the zinc alloy. The remainder of the coating is zinc and unavoidable impurities.

Another preferable composition contains about 10% aluminum. This increased amount of aluminum provides a better corrosion protection then the eutectoid composition with about 5% of aluminum.

Other elements such as silicon (Si) and magnesium (Mg) may be added to the zinc aluminum coating. With a view to optimizing the corrosion resistance, a particular good alloy comprises 2 % to 10 % aluminum and 0,2 % to 3,0 % magnesium, the remainder being zinc. An example is 5% Al, 0,5 % Mg and the rest being Zn.

An example of a post-tension steel strand is as follows:
- diameter 15,2 mm;
- steel section 166 mm²;
- E-modulus: 196000 MPa;
- breaking load Fₘ: 338000 N;
- yield force F_{p0.1}: 299021 N;
- tensile strength Rₘ 2033 MPa.

### Steel Fibre

Steel fibres adapted to be used in the present invention typically have a middle portion with a diameter D ranging from 0,30 mm to 1,30 mm, e.g. ranging from 0,50 mm to 1,1 mm. The steel fibres have a length ℓ so that the length-to-diameter ratio ℓ/D ranges from 40 to 100.

Preferably the steel fibres have ends to improve the anchorage in concrete. These ends may be in the form of bent sections, flattenings, undulations or thickened parts. Most preferably, the ends are in the form of three or more bent sections.

Figure 4 illustrates a preferable embodiment of a steel fibre 40. The steel fibre 40 has a straight middle portion 42. At one end of the middle portion 42, there are three bent sections 44, 46, 48. At the other end of the middle portion 42 there are also three bent sections 44', 46' and 48'. Bent sections 44, 44' make an angle a with respect to a line forming an extension to the middle portion 42. Bent sections 46, 46' make an angle b with respect to a line forming an extension to bent sections 44, 44'. Bent sections 48, 48' make an angle c with respect to bent sections 46, 46'.

The length ℓ of the steel fibre 40 may range between 50 mm and 75 mm and is typically 60 mm.
The diameter of the steel fibre may range between 0,80 mm and 1,20 mm. Typical values are 0,90 mm or 1,05 mm.
The length of the bent sections 44, 44', 46, 46', 48 and 48' may range between 2,0 mm and 5,0 mm. Typical values are 3,2 mm, 3,4 mm or 3,7 mm.
The angles a, b and c may range between 20° and 50°, e.g. between 24° and 47°.

The steel fibres may or may not be provided with a corrosion resistant coating such as zinc or a zinc aluminium alloy.

In a particular preferable embodiment of the steel fibre, there are four bent sections at each end of the middle portion.

In another particular preferable embodiment of the steel fibre, the middle portio0n has an elongation at maximum load higher than 4%, e.g. higher than 5%, e.g. higher than 5,5%. Steel fibres with such a high elongation at maximum load may be used in structural applications such as floors on piles, elevated systems and structural wall systems.

### Macro-synthetic fibre

Examples of macro-synthetic fibres are fibres based upon polyolefins like polypropylene or polyethylene or based upon other thermoplastics.

### Example of replacing steel bars

In an embodiment of the invention, a slab according to the invention preferably may not comprise any further reinforcement or reinforcement elements besides the fibers and the post-tension steel strands, especially no steel bars.

For a slab with a thickness of 150 mm and steel bars with a diameter of 6 mm and a spacing 150 mm at the top as well as stee lbars with a diameter of 6 mm and a spacing 150 mm at the bottom with a steel cover of 15 % this represents 45 kg/m³ steel and a concrete cover of 30 mm ( top and bottom) to achieve a resisting bending moment M_{Rd} = 11,44 (positive and negative moment capacity).

On the other hand, according to the present invention, an equivalent resisting bending moment M_{Rd} = 11,54 can be achieved with only 24 kg/m³ of steel fibre: DRAMIX^{®} 4D 65/60/BG, i.e. a steel fibre with three bent sections according to Figure 4 for the same slab with the same concrete. This means that according to the invention the amount or level of steel can be significantly reduced by using steel fibers compared to the amount of steel required and recommended using steel bars. Furthermore, the amount of steel fibers according to the invention is below or equal to 1,0 time the amount of steel recommended and used for the steel bars or rebars to be replaced.

### Example of a Slab on Ground

- slab thickness h: 150 mm
- slab length L: 100 m
- slab width b: 1 m (to calculate forces of post-tension steel strands in one direction)
- type of steel fibre: DRAMIX^{®} 4D 65/60/BG, i.e. a steel fibre with three bent sections according to Figure 4
- dosage of steel fibres: 25 kg/m³
- *γ*_{c} : 23.560,0 N/m³
- *µ*ₒ : 0,5
- minimum force exercised by post-tension steel strands: 88.350,0 N/m
- tensile strength Rₘ post-tension steel strand: 1860 MPa
- diameter post-tension steel strand: 15 mm
- spacing between two neighbouring post-tension steel strand be higher than 2,0 m, even higher than 2,5 m
- spacing between two neighbouring joints: 90 m, even larger than 120 m
- maximum crack width: 0,5 mm.

### Examples of a Slab on Concrete Piles

### First Example

- distance between neighbouring joints: 100 m
- thickness of concrete slab: 0,229 m
- upper load: 50 kN/m²
- distance between neighbouring concrete piles: 4 m x 4 m
- distance between post-tension steel strands within the straight zones: 0,25 m
- not necessary that there are post-tension steel strands outside the straight zones, but in case there are post-tension steel strands, the distance between post-tension steel strands outside the straight zones is greater than 0,90 m, preferably greater than 1,60 m

### Second Example

- distance between neighbouring joints: 100 m
- thickness of concrete slab: 0,495 m
- upper load: 50 kN/m²
- distance between neighbouring concrete piles: 6 m x 6 m
- distance between post-tension steel strands within the straight zones: 0,15 m
- not necessary that there are post-tension steel strands outside the straight zones, but in case there are post-tension steel strands, the distance between post-tension steel strands outside the straight zones is greater than 0,80 m, preferably greater than 1,50 m

## Claims

1. A concrete slab (10, 20) comprising conventional concrete and a combined reinforcement of both post-tension steel strands (12, 22, 26, 30) and fibres, wherein tension is applied to said post-tension steel strands (12, 22, 26, 30) only after the concrete has been cast,
said post-tension steel strands (12, 22, 26, 30)
- having a diameter ranging from 5 mm to 20 mm,
- having a tensile strength higher than 1700 MPa,
**characterized in that**
said fibres being either steel fibres (40) and being present in a dosage ranging from 10 kg/m³ to 35 kg/m³ or being macro-synthetic fibres and being present in a dosage ranging from 1,5 kg/m³ to 9,0 kg/m³,
wherein an amount of steel fibres used is below 1 time an amount recommended as rebar or steel bar replacement, and
wherein said concrete slab is free of a vapor barrier.

2. The concrete slab (10, 20) according to claim 1, wherein said conventional concrete has a characteristic compressive cube strength of 30 N/mm² or higher.

3. The concrete slab (10, 20) according to claim 1 or claim 2,
wherein said fibres are steel fibres (40) and/or wherein the steel fibres (40) are present in a dosage ranging from 15 kg/m³ to 35 kg/m³, preferably from 20 kg/m³ to 30 kg/m³, preferably from 10 kg/m³ to < 30 kg/m³ or further preferred from 10 kg/m³ to 27 kg/m³.

4. The concrete slab (10, 20) according to claim 3,
wherein said steel fibres comprise a straight middle portion (42) that have a tensile strength above 1400 MPa, preferably higher than 1500 MPa, preferably higher than 1600 MPa, preferably higher than 1700 MPa, further preferred higher than 2000 MPa, even further preferred higher than 2200 MPa, preferably between 1400 MPa and 3500 MPa.

5. The concrete slab (10, 20) according to claim 3 or claim 4,
wherein said steel fibres (40) comprise anchorage ends at both ends,
said anchorage ends each comprise three or four bent sections.

6. The concrete slab (10, 20) according to any one of the preceding claims, said concrete slab (10, 20) having a maximum crack width of 0,5 mm after hardening.

7. A concrete slab (10, 20) according to any one of the preceding claims,
said concrete slab (10, 20) having a length L greater than 100 m,
said concrete slab (10, 20) having joints,
said joints having a distance between neighbouring joints higher than 40 m.

8. The concrete slab (10, 20) according to any one of the preceding claims,
wherein said concrete slab (10, 20) is a concrete slab on ground and/or wherein said concrete slab (10, 20) has a uniform average density and/or wherein said concrete slab (10, 20) is cast in one day and/or in one go and/or be fully casted and/or wherein said concrete slab (10, 20) contains only the fibres and the post-tension steel strands (12, 22, 26, 30) as reinforcement elements and/or wherein conventional concrete has normal shrinkage and/or does not encompass low shrinkage concrete.

9. The concrete slab (10, 20) according to any one of the preceding claims,
wherein said post-tension steel strands (12, 22, 26, 30) have a distance between neighbouring post-tension steel strands (12, 22, 26, 30) or between neighbouring bundles of post-tension steel strands (12, 22, 26, 30) higher than 0,80 m and/or wherein tension is applied to the post-tension steel strands (12, 22, 26, 30) only after the concrete has been cast and the post-tension steel strands (12, 22, 26, 30) remain in place also once the concrete is completely cured/hardened and/or wherein the post-tension steel strands (12, 22, 26, 30) have a tensile strength higher 1800 MPa, preferably higher than 1900 MPa, preferably higher than 2000 MPa, further preferred between 1800 MPa and 4000 MPa and/or wherein the post-tension steel strands (12, 22, 26, 30) have a maximum breaking load of higher than 190 kN, preferably higher than 195 kN, preferably higher than 200 kN, preferably higher than 220 kN, further preferred between 195 kN and 350 kN and/or wherein the post-tension steel strands (12, 22, 26, 30) comprise anchor systems and/or ducts or sheathing.

10. A concrete slab (10, 20) according to any one of the preceding claims,
said concrete slab having a width b and a thickness h,
said post-tension steel strands (12, 22, 26, 30) exercising a compression force that is 0 % to 200 % greater than a force according to following formula ${m}_{o} \times {g}_{c} \times b \times h \times L / 2$
where
mₒ is the coefficient of friction between the concrete slab (10, 20) and a subbase; and where
g_{c} is the specific weight of concrete and/or wherein thickness h of a slab according to the invention may thereby preferably be between 4 cm and 75 cm, preferably 5 cm and 65 cm, further preferred 10 cm and 55 cm.

11. A construction comprising a concrete slab (10, 20) according to any one of claims 8 to 10,
said construction further comprising a plastic slip sheet between said concrete slab and said ground.

12. A construction comprising a concrete slab (10, 20) according to any one of claims 8 to 10,
a plastic slip sheet not being present between said concrete slab (10, 20) and said ground.

13. The concrete slab (10, 20) according to any one of claims 1 to 7,
wherein said concrete slab (10, 20) is a slab on concrete piles or gravel columns.

14. The concrete slab (10, 20) according to claim 13,
said concrete piles or gravel columns being arranged in a regular rectangular pattern or quadrilateral shape where each set of four concrete piles or gravel columns forms a rectangle, said concrete slab (10, 20) comprising straight zones connecting in the two directions, i.e. lengthwise and widthwise, the shortest distance between those areas of the concrete slab above the concrete piles or gravel columns, post-tension steel strands (12, 22, 26, 30) being present in said straight zones in bundles, the distance between neighbouring post-tension steel strands (12, 22, 26, 30) within a bundle being smaller than 0,80 m.

15. The concrete slab (10, 20) according to claim 14,
post-tension steel strands (12, 22, 26, 30) being present outside said straight zones, the shortest distance between post-tension steel strands (12, 22, 26, 30) outside said straight zones and the post-tension steel strands (12, 22, 26, 30) in said straight zones being larger than 0,80 m.

## Patentansprüche

1. Betonplatte (10, 20), umfassend herkömmlichen Beton und eine kombinierte Bewehrung aus sowohl Nachspannstahllitzen (12, 22, 26, 30) als auch Fasern, wobei Spannung auf die Nachspannstahllitzen (12, 22, 26, 30) erst aufgebracht wird, nachdem der Beton gegossen wurde,
wobei die Nachspannstahllitzen (12, 22, 26, 30)
- einen Durchmesser im Bereich von 5 mm bis 20 mm aufweisen,
- eine Zugfestigkeit aufweisen, die größer als 1700 MPa ist,
**dadurch gekennzeichnet, dass** die Fasern entweder Stahlfasern (40) sind und in einer Dosierung im Bereich von 10 kg/m³ bis 35 kg/m³ vorliegen oder makrosynthetische Fasern sind und in einer Dosierung im Bereich von 1,5 kg/m³ bis 9,0 kg/m³ vorhanden sind,
wobei eine verwendete Menge an Stahlfasern unter dem 1-Fachen einer als Betonstahl- oder Stabstahlersatz empfohlenen Menge liegt, und
wobei die Betonplatte frei von einer Dampfsperre ist.

2. Betonplatte (10, 20) nach Anspruch 1, wobei der herkömmliche Beton eine charakteristische Würfeldruckfestigkeit von 30 N/mm² oder höher aufweist.

3. Betonplatte (10, 20) nach Anspruch 1 oder 2,
wobei die Fasern Stahlfasern (40) sind und/oder wobei die Stahlfasern (40) in einer Dosierung im Bereich von 15 kg/m³ bis 35 kg/m³, bevorzugt von 20 kg/m³ bis 30 kg/m³, bevorzugt von 10 kg/m³ bis < 30 kg/m³ oder weiter bevorzugt von 10 kg/m³ bis 27 kg/m³ vorliegen.

4. Betonplatte (10, 20) nach Anspruch 3,
wobei die Stahlfasern einen geraden Mittelteil (42) umfassen, der eine Zugfestigkeit von über 1400 MPa, bevorzugt über 1500 MPa, bevorzugt über 1600 MPa, bevorzugt über 1700 MPa, weiter bevorzugt über 2000 MPa, noch weiter bevorzugt über 2200 MPa, bevorzugt zwischen 1400 MPa und 3500 MPa aufweist.

5. Betonplatte (10, 20) nach Anspruch 3 oder 4,
wobei die Stahlfasern (40) an beiden Enden Verankerungsenden umfassen, wobei die Verankerungsenden jeweils drei oder vier gebogene Abschnitte umfassen.

6. Betonplatte (10, 20) nach einem der vorstehenden Ansprüche, wobei die Betonplatte (10, 20) nach dem Aushärten eine maximale Rissbreite von 0,5 mm aufweist.

7. Betonplatte (10, 20) nach einem der vorstehenden Ansprüche, wobei die Betonplatte (10, 20) eine Länge L von mehr als 100 m aufweist, wobei die Betonplatte (10, 20) Fugen aufweist,
die Fugen einen Abstand zwischen benachbarten Fugen von mehr als 40 m aufweisen.

8. Betonplatte (10, 20) nach einem der vorstehenden Ansprüche, wobei die Betonplatte (10, 20) eine Betonplatte auf dem Boden ist und/oder wobei die Betonplatte (10, 20) eine gleichmäßige durchschnittliche Dichte aufweist und/oder wobei die Betonplatte (10, 20) an einem Tag und/oder in einem Durchgang gegossen wird und/oder vollständig gegossen wird und/oder wobei die Betonplatte (10, 20) nur die Fasern und die Nachspannstahllitzen (12, 22, 26, 30) als Bewehrungselemente enthält und/oder wobei herkömmlicher Beton ein normales Schwinden aufweist und/oder keinen schwindungsarmen Beton umfasst.

9. Betonplatte (10, 20) nach einem der vorstehenden Ansprüche, wobei die Nachspannstahllitzen (12, 22, 26, 30) einen Abstand zwischen benachbarten Nachspannstahllitzen (12, 22, 26, 30) oder zwischen benachbarten Bündeln von Nachspannstahllitzen (12, 22, 26, 30) von mehr als 0,80 m aufweisen und/oder wobei Spannung an die Nachspannstahllitzen (12, 22, 26, 30) erst angelegt wird, nachdem der Beton gegossen wurde, und die Nachspannstahllitzen (12, 22, 26, 30) auch dann an Ort und Stelle verbleiben, sobald der Beton vollständig ausgehärtet/erhärtet ist, und/oder wobei die Nachspannstahllitzen (12, 22, 26, 30) eine Zugfestigkeit von über 1800 MPa, bevorzugt über 1900 MPa, bevorzugt über 2000 MPa, weiter bevorzugt zwischen 1800 MPa und 4000 MPa, und/oder wobei die Nachspannstahllitzen (12, 22, 26, 30) eine maximale Bruchlast von über 190 kN, bevorzugt über 195 kN, bevorzugt über 200 kN, bevorzugt über 220 kN, weiter bevorzugt zwischen 195 kN und 350 kN aufweisen und/oder wobei die Nachspannstahllitzen (12, 22, 26, 30) Ankersysteme und/oder Hüllrohre oder Ummantelungen umfassen.

10. Betonplatte (10, 20) nach einem der vorstehenden Ansprüche,
wobei die Betonplatte eine Breite b und eine Dicke h aufweist,
die Nachspannstahllitzen (12, 22, 26, 30) eine Kompressionskraft ausüben, die 0 % bis 200 % größer ist als eine Kraft gemäß der folgenden Formel ${m}_{o} \times {g}_{c} \times b \times h \times L / 2$
wobei
mₒ der Reibungskoeffizient zwischen der Betonplatte (10, 20) und einem Unterbau ist; und wobei
g_{c} das spezifische Gewicht von Beton ist und/oder wobei die Dicke h einer erfindungsgemäßen Platte dadurch bevorzugt zwischen 4 cm und 75 cm, bevorzugt 5 cm und 65 cm, weiter bevorzugt 10 cm und 55 cm betragen kann.

11. Bauliche Anlage, umfassend eine Betonplatte (10, 20) nach einem der Ansprüche 8 bis 10,
wobei die bauliche Anlage ferner eine Kunststoffgleitfolie zwischen der Betonplatte und dem Boden umfasst.

12. Bauliche Anlage, umfassend eine Betonplatte (10, 20) nach einem der Ansprüche 8 bis 10,
wobei eine Kunststoffgleitfolie zwischen der Betonplatte (10, 20) und dem Boden nicht vorhanden ist.

13. Betonplatte (10, 20) nach einem der Ansprüche 1 bis 7,
wobei die Betonplatte (10, 20) eine Platte auf Betonpfählen oder Kiessäulen ist.

14. Betonplatte (10, 20) nach Anspruch 13,
wobei die Betonpfähle oder Kiessäulen in einem regelmäßigen rechteckigen Muster oder einer viereckigen Form angeordnet sind, wobei jeder Satz von vier Betonpfählen oder Kiessäulen ein Rechteck bildet, wobei die Betonplatte (10, 20) gerade Zonen umfasst, die in den beiden Richtungen, d. h. in Längsrichtung und in Querrichtung, den kürzesten Abstand zwischen denjenigen Bereichen der Betonplatte über den Betonpfählen oder Kiessäulen verbinden, wobei Nachspannstahllitzen (12, 22, 26, 30) in den geraden Zonen in Bündeln vorhanden sind, wobei der Abstand zwischen benachbarten Nachspannstahllitzen (12, 22, 26, 30) innerhalb eines Bündels kleiner als 0,80 m ist.

15. Betonplatte (10, 20) nach Anspruch 14,
wobei Nachspannstahllitzen (12, 22, 26, 30) außerhalb der geraden Zonen vorhanden sind, wobei der kürzeste Abstand zwischen Nachspannstahllitzen (12, 22, 26, 30) außerhalb der geraden Zonen und den Nachspannstahllitzen (12, 22, 26, 30) in den geraden Zonen größer als 0,80 m ist.

## Revendications

1. Dalle de béton (10, 20) comprenant du béton classique et une armature combinée à la fois de torons en acier de post-tension (12, 22, 26, 30) et de fibres, dans laquelle une tension n'est appliquée auxdits torons en acier de post-tension (12, 22, 26, 30) qu'après que le béton a été coulé,
lesdits torons en acier de post-tension (12, 22, 26, 30)
- ayant un diamètre allant de 5 mm à 20 mm,
- ayant une résistance à la traction supérieure à 1700 MPa,
**caractérisée en ce que** lesdites fibres, soit sont des fibres d'acier (40) et sont présentes en une concentration allant de 10 kg/m³ à 35 kg/m³, soit sont des fibres macro-synthétiques et sont présentes en une concentration allant de 1,5 kg/m³ à 9,0 kg/m³,
dans laquelle une quantité de fibres d'acier utilisée est inférieure à 1 fois une quantité recommandée en tant que remplacement de barre d'armature ou de barre d'acier, et
dans laquelle ladite dalle de béton est exempte de pare-vapeur.

2. Dalle de béton (10, 20) selon la revendication 1, dans laquelle ledit béton classique a une résistance caractéristique de compression sur cube de 30 N/mm² ou plus élevée.

3. Dalle de béton (10, 20) selon la revendication 1 ou la revendication 2,
dans laquelle lesdites fibres sont des fibres d'acier (40) et/ou dans laquelle les fibres d'acier (40) sont présentes en une concentration allant de 15 kg/m³ à 35 kg/m³, de préférence de 20 kg/m³ à 30 kg/m³, de préférence de 10 kg/m³ à < 30 kg/m³ ou de préférence encore des 10 kg/m³ à 27 kg/m³.

4. Dalle de béton (10, 20) selon la revendication 3,
dans laquelle lesdites fibres d'acier comprennent une partie centrale droite (42) qui a une résistance en traction supérieure à 1400 MPa, de préférence supérieure à 1500 MPa, de préférence supérieure à 1600 MPa, de préférence supérieure à 1700 MPa, de préférence encore supérieure à 2000 MPa, voire de préférence encore supérieure à 2200 MPa, de préférence entre 1400 MPa et 3500 MPa.

5. Dalle de béton (10, 20) selon la revendication 3 ou la revendication 4,
dans laquelle lesdites fibres d'acier (40) comprennent des extrémités d'ancrage au niveau de l'une et l'autre des extrémités, lesdites extrémités d'ancrage comprennent chacune trois ou quatre sections pliées.

6. Dalle de béton (10, 20) selon l'une quelconque des revendications précédentes, ladite dalle de béton (10, 20) ayant une largeur maximale de fissure de 0,5 mm après durcissement.

7. Dalle de béton (10, 20) selon l'une quelconque des revendications précédentes, ladite dalle de béton (10, 20) ayant une longueur L supérieure à 100 m, ladite dalle de béton (10, 20) ayant des joints,
lesdits joints ayant une distance entre joints voisins supérieure à 40 m.

8. Dalle de béton (10, 20) selon l'une quelconque des revendications précédentes, dans laquelle ladite dalle de béton (10, 20) est une dalle de béton sur le sol et/ou dans laquelle ladite dalle de béton (10, 20) a une masse volumique moyenne uniforme et/ou dans laquelle ladite dalle de béton (10, 20) est coulée en un jour et/ou en une fois et/ou est coulée complètement et/ou dans laquelle ladite dalle de béton (10, 20) ne contient que les fibres et les torons en acier de post-tension (12, 22, 26, 30) en tant qu'éléments d'armature et/ou dans laquelle le béton classique a un retrait normal et/ou n'englobe pas du béton à faible retrait.

9. Dalle de béton (10, 20) selon l'une quelconque des revendications précédentes, dans laquelle lesdits torons en acier de post-tension (12, 22, 26, 30) ont une distance entre torons en acier de post-tension (12, 22, 26, 30) voisins ou entre faisceaux voisins de torons en acier de post-tension (12, 22, 26, 30) supérieure à 0,80 m et/ou dans laquelle une tension n'est appliquée aux torons en acier de post-tension (12, 22, 26, 30) qu'après que le béton a été coulé et les torons en acier de post-tension (12, 22, 26, 30) restent en place également une fois que le béton est complètement durci/solidifé et/ou dans laquelle les torons en acier de post-tension (12, 22, 26, 30) ont une résistance en traction supérieure à 1800 MPa, de préférence supérieure à 1900 MPa, de préférence supérieure à 2000 MPa, de préférence encore entre 1800 MPa et 4000 MPa et/ou dans laquelle les torons en acier de post-tension (12, 22, 26, 30) ont une charge maximale à la rupture supérieure à 190 kN, de préférence supérieure à 195 kN, de préférence supérieure à 200 kN, de préférence supérieure à 220 kN, de préférence encore entre 195 kN et 350 kN et/ou dans laquelle les torons en acier de post-tension (12, 22, 26, 30) comprennent des systèmes d'ancrage et/ou des gaines ou des revêtements.

10. Dalle de béton (10, 20) selon l'une quelconque des revendications précédentes,
ladite dalle de béton ayant une largeur b et une épaisseur h,
lesdits torons en acier de post-tension (12, 22, 26, 30) exerçant une force de compression qui est de 0 % à 200 % supérieure à une force selon la formule suivante ${m}_{o} \times {g}_{c} \times b \times h \times L / 2$
où
mₒ est le coefficient de frottement entre la dalle de béton (10, 20) et une sous-couche ; et où
g_{c} est le poids spécifique de béton et/ou dans laquelle l'épaisseur h d'une dalle selon l'invention peut de ce fait être de préférence entre 4 cm et 75 cm, de préférence 5 cm et 65 cm, de préférence encore 10 cm et 55 cm.

11. Construction comprenant une dalle de béton (10, 20) selon l'une quelconque des revendications 8 à 10,
ladite construction comprenant en outre une feuille intercalaire en plastique entre ladite dalle de béton et ledit sol.

12. Construction comprenant une dalle de béton (10, 20) selon l'une quelconque des revendications 8 à 10,
une feuille intercalaire en plastique n'étant pas présente entre ladite dalle de béton (10, 20) et ledit sol.

13. Dalle de béton (10, 20) selon l'une quelconque des revendications 1 à 7,
dans laquelle ladite dalle de béton (10, 20) est une dalle sur des pieux en béton ou des colonnes de gravier.

14. Dalle de béton (10, 20) selon la revendication 13,
lesdits pieux en béton ou lesdites colonnes de gravier étant agencés dans un motif rectangulaire régulier ou une forme quadrilatérale où chaque ensemble de quatre pieux en béton ou colonnes de gravier forme un rectangle, ladite dalle de béton (10, 20) comprenant des zones droites se reliant dans les deux directions, c'est-à-dire dans le sens de la longueur et dans le sens de la largeur, la distance la plus courte entre ces zones de la dalle de béton étant au-dessus des pieux en béton ou des colonnes de gravier, des torons en acier de post-tension (12, 22, 26, 30) étant présents dans lesdites zones droites en faisceaux, la distance entre des torons en acier de post-tension (12, 22, 26, 30) voisins au sein d'un faisceau étant plus petite que 0,80 m.

15. Dalle de béton (10, 20) selon la revendication 14,
des torons en acier de post-tension (12, 22, 26, 30) étant présents à l'extérieur desdites zones droites, la distance la plus courte entre des torons en acier de post-tension (12, 22, 26, 30) à l'extérieur desdites zones droites et les torons en acier de post-tension (12, 22, 26, 30) dans lesdites zones droites étant plus grande que 0,80 m.
